# EUROPÄISCHE PATENTSCHRIFT

(11) **EP 1 379 906 B1**
(45) Veröffentlichungstag und Bekanntmachung des Hinweises auf die Patenterteilung: **20.08.2008**
(21) Anmeldenummer: 02742874.7
(22) Anmeldetag: 04.04.2002
(51) Int. Cl.: G02B 21/00

(54) **ERWEITERTE BLENDENSTEUERUNG FÜR BILDEINBLENDUNGEN IN EINEM STEREOMIKROSKOP**
ENHANCED SHUTTER CONTROL FOR IMAGES THAT ARE FADED INTO A STEREO MICROSCOPE
COMMANDE AMELIOREE DE DIAPHRAGME POUR IMAGES EVANOUIES DANS UN STEREOMICROSCOPE

(30) Priorität: 12.04.2001 DE 10118703
(43) Veröffentlichungstag der Anmeldung: 14.01.2004
(73) Patentinhaber: Leica Microsystems (Schweiz) AG, 9435 Heerbrugg (CH)
(72) Erfinder: SPINK, Roger, CH-9442 Berneck (CH); DEVERIN, Jacques, Alain, CH-9443 Widnau (CH); MOSER, Benno, CH-9442 Berneck (CH); MANNSS, Jürgen, CH-3672 Oberdiessbach (CH)
(74) Vertreter: Rosenich, Paul
(86) Internationale Anmeldenummer: PCT/EP2002/003748
(87) Internationale Veröffentlichungsnummer: WO 2002/084365

(56) Entgegenhaltungen:
- EP-A- 0 712 600
- EP-A- 0 928 981
- WO-A-00/68724
- DE-A- 10 021 063
- PATENT ABSTRACTS OF JAPAN vol. 2000, no. 19, 5. Juni 2001 (2001-06-05) & JP 2001 046399 A (OLYMPUS OPTICAL CO LTD), 20. Februar 2001 (2001-02-20)

## Beschreibung

Die Erfindung betrifft eine Blendensteuerung bei der Integration von Zusatzdaten in einem oder mehreren Betrachtungsstrahlengängen eines Stereomikroskops zur wahlweisen Abschaltung eines unerwünschten Betrachtungskanals.

In modernen Operationsmikroskopen ist es üblich, Zusatzinformationen in eines der beiden Zwischenbilder einzublenden. Diese Bildinformationen werden entweder den originären optischen Bilddaten passgenau überlagert - z. B. korrelierte Daten, CT-, MRI-Konturen - oder ohne Bezug zur optischen Objektabbildung dargestellt (nicht-korrelierte Bilddaten, Standard-Schnitte etc.), indem der betreffende Objektstrahlengang ausgeblendet oder in einem begrenzten Teilbereich überlagert wird (Monitoring Kurven, Menüs etc.).

Keine passgenaue Überlagerung, sondern eine Einblendung eines Monitor-Bildes nur in einen begrenzten Teilbereich des Mikroskopsichtfeldes findet bei einem Operationsmikroskop statt, wie es in der Veröffentlichungsschrift EP-A-0 928 981 gezeigt wird. Hierbei wird ein einschwenkbares Prisma nicht in den Strahlengang des Mikroskops selbst, sondern so in die unmittelbare Nähe des Strahlengangs eingeschwenkt, dass dadurch das Bild von einem LCD-Monitor durch die Okularlinse hindurchprojiziert wird. Des Weiteren ist eine fix angeordnete Flüssigkristallblende vorgesehen, die, gesteuert über einen Flüssigkristall-Treiber, in bestimmten Regionen die ganze, nur einen Teil oder keine Lichtmenge passieren lässt

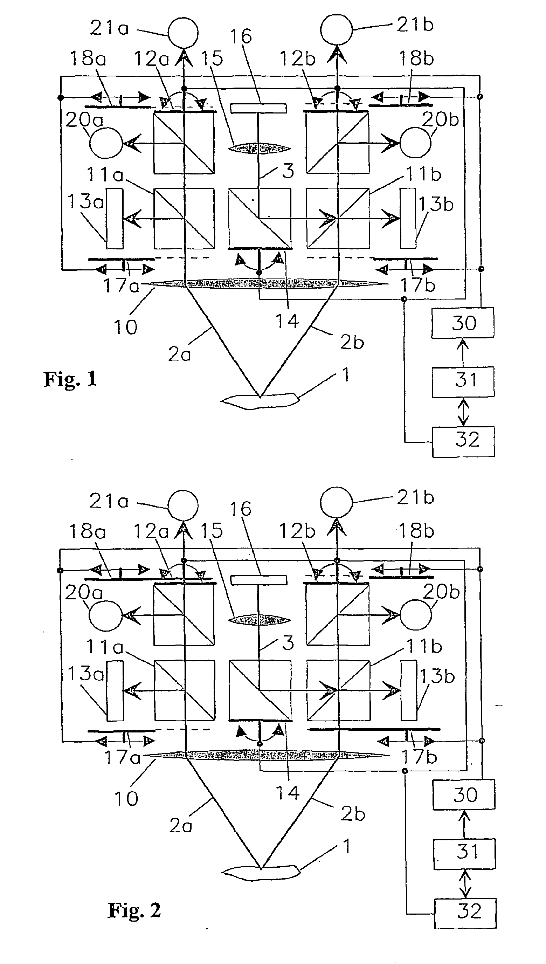

Bei einem erfindungsgemäßen Stereomikroskop gemäß der vorliegenden Anmeldung wird im Fall der Abblendung des Objektlichts eine Blende zwischen Objektstrahlengang und einen die Zusatzinformation (Bildinformation eines Displays) einblendenden Strahlenteiler im Strahlengang des Mikroskops eingeschoben, sodass nur die zusätzlich eingeblendete Information sichtbar ist. Sollen mit Hilfe des weiteren Strahlverlaufes mehrere Benutzer die Zusatzinformation betrachten können, erfolgt die Strahlzusammenführung mit dem ersten Strahlteiler (wie z.B. 11b in Fig. 1).

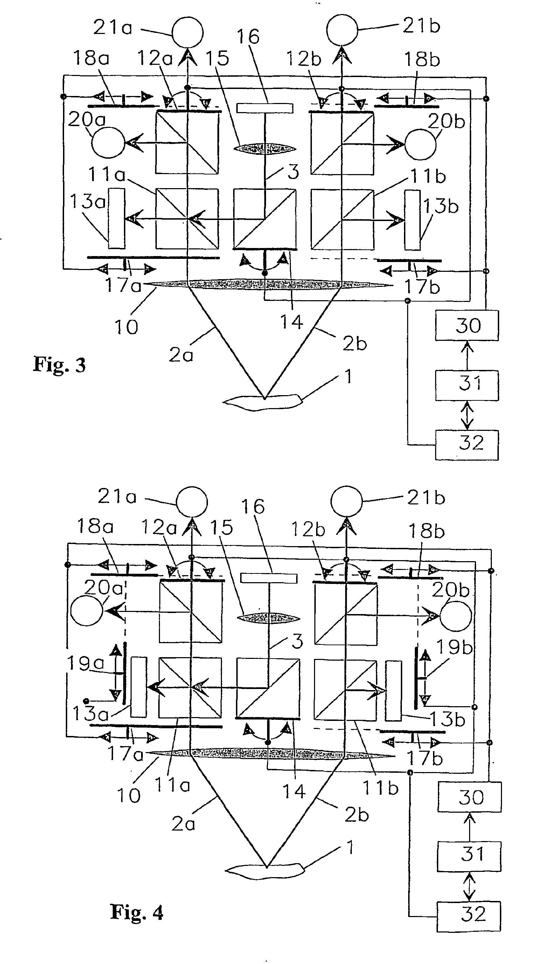

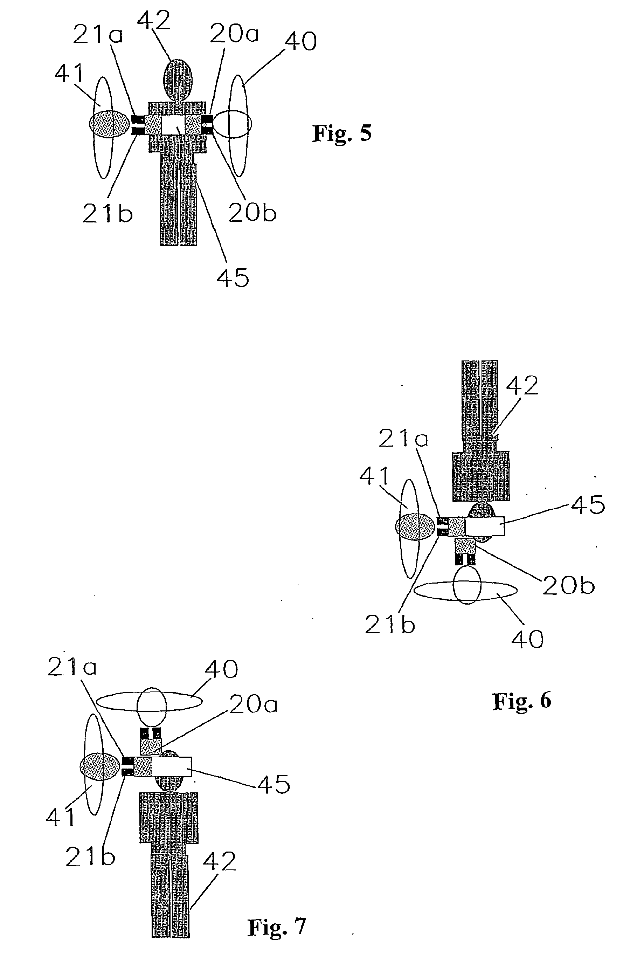

Zur weiteren Erläuterung wird auf die Zeichnung verwiesen, wobei in den Fig. 1-4 schematische Darstellungen unterschiedlicher Blendenpositionen enthalten sind. In den Fig. 5-7 sind Positionierungs-Varianten des Chirurgen und des Assistenten bezüglich des zu beobachtenden Patienten dargestellt.

In Fig. 1 projiziert ein Display 16 entlang des Strahlengangs für die Zusatzinformation(en) 3 mittels einer Optik 15 und eines schaltbaren Prismas 14 (mögliche Projektion in den linken oder rechten Strahlengang) ein mit Zuatzinformationen versehenes Bild in den rechten Strahlengang 2b. Über den Strahlteiler 11 b wird diese Information mit dem Bild des Objektes 1 überlagert und dem optionalen Bildsensor 13b und den weiteren Betrachtungsstrahlengängen zugeführt.

Bei Operationsmikroskopen sind hinsichtlich ihrer Funktionen drei unterschiedliche "Betrachter" zu unterscheiden:
1) der Chirurg, der fast ausschließlich die Betrachtungsausgänge 21 a und 21 b stereoskopisch benutzt und im allgemeinen über Art und Zeitpunkt des Einspiegelns der Zusatzinformation entscheidet;
2a) der Assistent, der fast ausschließlich entweder den rechten Betrachtungsausgang 20a - wie z.B. in Fig. 6 - oder den linken Betrachtungsstrahlengang 20b - wie z.B. in Fig. 7 - monoskopisch verwendet, wenn er im rechten Winkel zum Chirurgen 41 und dem Mikroskop steht ( Craniotomie), oder
2b) der Betrachtungsstrahlengang 20a und 20b wird stereoskopisch verwendet, wenn der Assistent 40 dem Chirurgen 41 gegenüber und hinter dem Mikroskop steht, wie in Fig. 5 dargestellt (spinale Operationen);
3) eine Betrachtergruppe befindet sich neben dem Mikroskop, die im wesentlichen diejenigen Informationen auf einem Monitor im OP sehen sollten, die der Chirurg 41 wahrnimmt.

Im "Betrachter"-Fall 1) stehen dem Chirurgen 41 bei stereoskopischem Einblick in die beiden Okulare aufgrund der Zusatzinformation in einem Kanal, insbesondere bei Datensubstitution durch das Einblenden z.B. von VideoDaten, zwei unterschiedliche Informationen zur Verfügung, die ihn irritieren können.

Es ist daher die Aufgabe der vorliegenden Erfindung, diese Nachteile zu beseitigen und unter Verwendung zusätzlicher Blenden und einer geeigneten Blendensteuerung dem Chirurgen das Abschalten der im Moment nicht gewünschten Objektinformation zu ermöglichen.

Mittels der Blenden 18a und 18b kann er sich, falls gewünscht, nur auf die Zusatzinformation konzentrieren. In Abb. 2 wird die Zusatzinformation auf den rechten Betrachtungsstrahlengang geschaltet, die geschlossene Blende 18a lässt somit für den Chirurgen 41 nur die Sicht 21 b auf die Zusatzinformation mit dem rechten Auge zu. Das linke Auge sieht nichts.

Der Assistentenausgang kann ebenfalls geschaltet werden, entweder zu den beiden seitlichen monoskopischen Ausgängen oder zum hinteren stereoskopischen Ausgang je nach chirurgischer Applikation.

In cranieller Applikation sieht ein seitlich links angeordneter Assistent 40 über den Ausgang 20a die Objektinfomation monoskopisch, nicht aber die Zusatzinformation; ein seitlich rechts angeordneter Assistent 40 nimmt monoskopisch über den Ausgang 20b wie der Chirurg 41 nur die Zusatzinformationen wahr.

In spinaler Applikation nimmt der Assistent 40 beide Informationen stereoskopisch über die Ausgänge 20a und 20b wahr. Somit sieht er auch beide Informationen mit unterschiedlichem Gehalt.

Im Controller 31 können Vorlieben bestimmter Chirurgen gespeichert werden und im Applikationsfall abgerufen werden. Zum Beispiel möchte Chirurg A immer beide Informationen gleichzeitig sehen (die Blenden 18a und 18b bleiben dann immer geöffnet), Chirurg B aber ausschließlich die eingeblendete Information (je nach Schaltposition des Prismas 14 schließt der Blendencontroller 30 Blende 18a oder 18b).

Fig. 3 zeigt die Einstellung mit eingeblendeten Zusatzinformationen im linken Strahlengang und geöffneten Blenden im chirugischen Strahlengang 21 a und 21b.

In Fig. 4 ist die Anordnung der Blenden für die Assistentenausgänge ersichtlich. Dies sind im wesentlichen die Blenden 19a und 19b, die sich im Falle eines rückwärtig positionierten Assistenten 40 (spinale Anordnung) schließen lassen.

Die Erfindung bietet folgende Vorteile:
- das wahlweise Abschalten von zeitweise unerwünschter oder den Chirurg 41 störender Objektinformation;
- der Assistent 40 kann in jeder Applikation mit einem Bild des Objektes 1 versorgt werden;
- ein angeschlossenes Kamerasystem kann das Objekt 1 immer detektieren;
- die Blendenfunktion adaptiert sich automatisch an die aktuelle oder sich ändernde Position der Zusatzinformation(en).

### Bezugszeichenliste

- 1: Objekt (Patient)
- 2a: Objektstrahl linker Strahlengang
- 2b: Objektstrahl rechter Strahlengang
- 3: Strahlengang für Zusatzinformation(en)
- 10: Hauptobjektiv
- 11 a: Strahlenteiler linker Strahlengang, Video u. Zusatzinformationen
- 11 b: Strahlenteiler rechter Strahlengang, Video u. Zusatzinformationen
- 12a: Strahlenteiler linker Strahlengang, 1. und 2. Beobachter
- 12b: Strahlenteiler rechter Strahlengang, 1. und 2. Beobachter
- 13a: Video-Sensor linker Strahlengang
- 13b: Video-Sensor rechter Strahlengang
- 14: (schaltbares) Umlenkprisma (Strahlengang Zusatzinformationen)
- 15: Abbildungsoptik für (16)
- 16: Display für Zusatzinformationen
- 17a: Blende zum Ausblenden des Objektlichtes im linken Strahlengang
- 17b: Blende zum Ausblenden des Objektlichtes im rechten Strahlengang
- 18a: Blende zum Ausblenden des Objektlichtes im linken Strahlengang
- 18b: Blende zum Ausblenden des Objektlichtes im rechten Strahlengang
- 19a: Blende zum Ausblenden des Objektlichtes im linken Assistentenstrahlengang
- 19b: Blende zum Ausblenden des Objektlichtes im rechten Assistentenstrahlengang
- 20a: Betrachtungsausgang für monokularen Beobachter (40), links
- 20b: Betrachtungsausgang für monokularen Beobachter (40), rechts
- 21 a: Betrachtungsausgang für Stereobeobachtung für (41), linker Strahlengang
- 21 b: Betrachtungsausgang für Stereobeobachtung für (41), rechter Strahlengang
- 30: Blenden-Controller
- 31: Controller Datentyp-Information und Benutzer-Setup
- 32: Steuerung und Sensorik der Rotationsprismen
- 40: Assistent
- 41: Chirurg
- 42: Patient
- 45: Optikträger

## Patentansprüche

1. Stereomikroskop mit einem Hauptobjektiv (10), mit einem linken Strahlengang (2a) und mit einem rechten Strahlengang (2b), die die Bildinformation eines Objekts (1) durch das Hauptobjektiv (10) einem linken Okular (21a) und einem rechten Okular (21b) zuführen, mit Blenden im linken Strahlengang (2a) und rechten Strahlengang (2b), die so betätigbar sind, dass die Bildinformation des Objekts (1) abschaltbar ist, einer Blendensteuerung für diese Blenden, und einer Einspiegelvorrichtung mit einem schaltbaren Umlenkprisma (14) zur Einspiegelung von Bildinformationen eines außerhalb der Strahlengänge (2a, 2b) angeordneten Displays (16), **dadurch gekennzeichnet, dass** die Einspiegelvorrichtung je einen Strahlenteiler (11 a, 11 b) in beiden Strahlengängen (2a, 2b) umfasst, und dass schaltbare Blenden (17a, 17b) zum Abschalten der Objektinformation auf den optischen Wegen Objekt (1) - Hauptobjektiv (10) - Strahlenteiler (11a) - Okular (21 a) vor dem Strahlenteiler (11a) und Objekt (1) - Hauptobjektiv (10) - Strahlenteiler (11b) - Okular (21 b) vor dem Strahlenteiler (11 b) zur Einblendung der Bildinformation des Displays (16) angeordnet sind und dass zusätzliche schaltbare Blenden (18a, 18b) zwischen den Strahlenteilern (11a, 11 b) und den Okularen (21a, 21 b) angeordnet sind, und dass das schaltbare Umlenkprisma (14) auf den linken Strahlengang (2a), auf den rechten Strahlengang (2b) oder auf beide Strahlengänge (2a, 2b) schaltbar ist, sodass die Bildinformation des Displays (16) in den linken Strahlengang (2a), in den rechten Strahlengang (2b) oder In beide Strahlengänge (2a, 2b) einspiegelbar ist.

2. Stereomikroskop nach Anspruch 1, **dadurch gekennzeichnet, dass** in mindestens dem linken Strahlengang (2a), mindestens dem rechten Strahlengang (2b) oder in beiden Strahlengängen (2a, 2b) auf dem optischen Weg Objekt (1) - Hauptobjektiv (10) - Strahlenteiler (11) - Okular (21) hinter dem Strahlenteiler (11) und vor dem Okular (21) ein Ausspiegelungs-Strahlenteiler (12a, 12b) angeordnet Ist, der einen Assistenten-Strahlengang einem Assistenten-Okular (20a, 20b) zuführt und dass vor diesem Assistenten-Okular (20a, 20b) Assistenten-Strahlengang-Blenden (19a, 19b) zur Schließung dieser Assistenten-Strahlengänge angeordnet sind.

3. Stereomikroskop nach Anspruch 1 oder 2, **dadurch gekennzeichnet, dass** eine Steuereinrichtung für alle oder einen Teil der Blenden vorgesehen ist, die anhand von applikations- und/oder benutzerspezifischen Gesichtspunkten Blenden schließt oder offen lässt.

4. Stereomikroskop nach Ansprüchen 2 und 3 **dadurch gekennzeichnet, dass** ein erster Ausspiegelungs-Strahlenteiler (12a) einen Assistenten-Strahlengang aus dem linken Strahlengang (2a) dem linken Assistenten-Okular (20a) zuführt, ein zweiter Ausspiegelungs-Strahlenteiler (12b) einen Assistenten-Strahiengang aus dem rechten Strahlengang (2b) dem rechten Assistenten-Okular (20b) zuführt und dass beide Ausspiegelungs-Strahlenteiler (12a, 12b) für eine stereoskopische Ausspiegelung bei spinalen Operationen ausrichtbar sind und dass die Assistenten-Strahlengang-Blenden (19a, 19b) in diesen in einer Linie ausgerichteten Assistenten-Strahlengängen ansteuerbar sind.

## Claims

1. Stereomicroscope with a main objective (10), with a left beam path (2a) and with a right beam bath (2b), which feed the image information of an object (1) through the main objective (10) to a left eyepiece (21a) and a right eyepiece (21b), with shutters in the left beam path (2a) and right beam path (2b) which can be actuated such that the image information of the object (1) can be switched off, a shutter control for those shutters, and an inwardly reflecting apparatus with a switchable deflection prism (14) for inwardly reflecting image information of a display (16) which is arranged outside the beam paths (2a, 2b), **characterized in that** the inwardly reflecting apparatus comprises in each case one beam splitter (11a, 11b) in both beam paths (2a, 2b) and **in that** switchable shutters (17a, 17b) for switching off the object information on the optical paths object (1) - main objective (10) - beam splitter (11a) - eyepiece (21a) are arranged upstream of the beam splitter (11a) and object (1) - main objective (10) - beam splitter (11b) - eyepiece (21b) are arranged upstream of the beam splitter (11b) for injecting the image information of the display (16) and **in that** additional switchable shutters (18a, 18b) are arranged between the beam splitters (11a, 11b) and the eyepieces (21a, 21b) and **in that** the switchable deflection prism (14) can be switched to the left beam path (2a), to the right beam path (2b) or to both beam paths (2a, 2b) such that the image information of the display (16) can be reflected into the left beam path (2a), into the right beam path (2b) or into both beam paths (2a, 2b).

2. Stereomicroscope according to Claim 1, **characterized in that**, in at least the left beam path (2a), at least the right beam path (2b) or in both beam paths (2a, 2b) on the optical path object (1) - main objective (10) - beam splitter (11) - eyepiece (21), an outwardly reflecting beam splitter (12a, 12b) is arranged downstream of the beam splitter (11) and upstream of the eyepiece (21), which outwardly reflecting beam splitter supplies an assistant beam path to an assistant eyepiece (20a, 20b) and **in that** assistant beam path shutters (19a, 19b) for closing these assistant beam paths are arranged upstream of said assistant eyepiece (20a, 20b).

3. Stereomicroscope according to Claim 1 or Claim 2, **characterized in that** a control device is provided for all or some of the shutters, which control device closes or leaves open shutters using application- and/or user-specific aspects.

4. Stereomicroscope according to Claims 2 and 3, **characterized in that** a first outwardly reflecting beam splitter (12a) supplies an assistant beam path from the left beam path (2a) to the left assistant eyepiece (20a), a second outwardly reflecting beam splitter (12b) supplies an assistant beam path from the right beam path (2b) to the right assistant eyepiece (20b) and **in that** both outwardly reflecting beam splitters (12a, 12b) can be aligned for a stereoscopic outward reflection in spinal operations and **in that** the assistant beam path shutters (19a, 19b) can be driven in these assistant beam paths which are linearly aligned.

## Revendications

1. Microscope stéréoscopique avec un objectif principal (10), avec un trajet de faisceau à gauche (2a) et avec un trajet de faisceau à droite (2b) qui acheminent les informations d'image d'un objet (1) à travers l'objectif principal (10) vers un oculaire à gauche (21a) et vers un oculaire à droite (21b), avec des obturateurs dans le trajet de faisceau à gauche (2a) et dans le trajet de faisceau à droite (2b), qui peuvent être actionnés de manière à pouvoir couper les informations d'image de l'objet (1), avec une commande d'obturateur pour ces obturateurs, et avec un dispositif d'incrustation avec un prisme de déviation commutable (14) pour incruster des informations d'image d'un afficheur (16) disposé à l'extérieur des trajets de faisceaux (2a, 2b), **caractérisé en ce que** le dispositif d'incrustation comporte un séparateur de faisceau (11a, 11b) dans chacun des deux trajets de faisceaux (2a, 2b), et **en ce que** des obturateurs commutables (17a, 17b) sont disposés pour couper les informations de l'objet sur les trajets de faisceaux "objet (1) - objectif principal (10) - séparateur de faisceau (11a) - oculaire (21a)" avant le séparateur de faisceau (11a) et "objet (1) - objectif principal (10) - séparateur de faisceau (11b) - oculaire (21b)" avant le séparateur de faisceau (11b) pour incruster les informations d'image de l'afficheur (16), et **en ce que** des obturateurs commutables supplémentaires (18a, 18b) sont disposés entre les séparateurs de faisceaux (11a, 11b) et les oculaires (21a, 21b), et **en ce que** le prisme de déviation commutable (14) peut être commuté sur le trajet de faisceau à gauche (2a), sur le trajet de faisceau à droite (2b) ou sur les deux trajets de faisceaux (2a, 2b) de manière à pouvoir incruster les informations d'image de l'afficheur (16) dans le trajet de faisceau à gauche (2a), dans le trajet de faisceau à droite (2b) ou dans les deux trajets de faisceaux (2a, 2b).

2. Microscope stéréoscopique selon la revendication 1, **caractérisé en ce qu'**un séparateur de faisceau par réflexion (12a, 12b) est disposé au moins sur le trajet de faisceau à gauche (2a), au moins sur le trajet de faisceau à droite (2b) ou sur les deux trajets de faisceaux (2a, 2b) sur le chemin optique "objet (1) - objectif principal (10) - séparateur de faisceau (11) - oculaire (21)" après le séparateur de faisceau (11) et avant l'oculaire (21), qui achemine un trajet de faisceau d'assistant vers un oculaire d'assistant (20a, 20b) et **en ce que** des obturateurs des trajets de faisceaux d'assistant (19a, 19b) sont disposés avant cet oculaire d'assistant (20a, 20b) pour fermer ces trajets de faisceaux d'assistants.

3. Microscope stéréoscopique selon la revendication 1 ou 2, **caractérisé en ce qu'**une installation de commande est prévue pour tous les obturateurs ou pour une partie d'entre eux, qui ferme ou laisse ouverts les obturateurs en se fondant sur des applications et/ou des points de vue spécifiques à l'utilisateur.

4. Microscope stéréoscopique selon les revendications 2 et 3, **caractérisé en ce qu'**un premier séparateur de faisceau par réflexion (12a) achemine un trajet de faisceau d'assistant à partir du trajet de faisceau à gauche (2a) vers l'oculaire d'assistant à gauche (20a), qu'un deuxième séparateur de faisceau par réflexion (12b) achemine un trajet de faisceau d'assistant à partir du trajet de faisceau à droite (2b) vers l'oculaire d'assistant à droite (20b), et que les deux séparateurs de faisceaux par réflexion (12a, 12b) peuvent être orientés pour une réflexion stéréoscopique lors d'opérations spinales, et que les obturateurs des trajets de faisceaux d'assistant (19a, 19b) peuvent être commandés dans ces trajets de faisceaux d'assistant alignés.
